# EUROPEAN PATENT APPLICATION

(11) **EP 4 782 663 A1**
(43) Date of publication of application: **29.07.2026**
(21) Application number: 26151346.9
(22) Date of filing: 12.01.2026
(51) Int. Cl.: F01D 25/04, F01D 9/04, B64C 11/02, B64C 11/14, B64C 11/26, B64D 33/02, F02K 1/04, B64D 29/00, B64C 11/00, B64D 33/04, B22F 5/04, B33Y 80/00

(54) **APPARATUS FOR AN AIRCRAFT**

(30) Priority: 10.01.2025 US 202519016678
(71) Applicant: RTX Corporation, Farmington, CT 06032 (US)
(72) Inventor: YAZICI, Murat, Glastonbury, 06033 (US); ALI, Amr A., South Windsor, 06074 (US)
(74) Representative: Dehns

(57) **Abstract**

An apparatus is provided for an aircraft that includes an open rotor propulsion system (20). The open rotor propulsion system (20) includes an open propulsor rotor (34), an open guide vane structure (36) and a turbine engine (32). The open guide vane structure is axially next to the open propulsor rotor. The turbine engine is configured to drive rotation of the open propulsor rotor about an axis (24). An exterior surface (134) of a component (132) of the open rotor propulsion system is exposed to and borders an environment (22) external to the open rotor propulsion system. The component is configured with an acoustic treatment (116) extending axially and circumferentially along the exterior surface (134).

## Description

### Technical Field

This disclosure relates generally to an aircraft and, more particularly, to a propulsion system for the aircraft.

### Background Information

Various types of propulsion systems for an aircraft are known in the art, including open rotor propulsion systems. While known aircraft propulsion systems have various benefits, there is still room in the art for improvement.

### SUMMARY OF THE DISCLOSURE

According to an aspect of the present invention, an apparatus is provided for an aircraft that includes an open rotor propulsion system. The open rotor propulsion system includes an open propulsor rotor, an open guide vane structure and a turbine engine. The open guide vane structure is axially next to the open propulsor rotor. The turbine engine is configured to drive rotation of the open propulsor rotor about an axis. An exterior surface of a component of the open rotor propulsion system is exposed to and borders an environment external to the open rotor propulsion system. The component is configured with an acoustic treatment extending axially and circumferentially along the exterior surface.

According to another aspect of the present invention, another apparatus is provided for an aircraft that includes an open rotor propulsion system. The open rotor propulsion system includes an open propulsor rotor, a turbine engine and a splitter. The turbine engine is configured to drive rotation of the open propulsor rotor about an axis. The turbine engine includes a flowpath, a compressor section, a combustor section and a turbine section. The flowpath extends through the compressor section, the combustor section and the turbine section from an inlet into the open rotor propulsion system to an exhaust from the open rotor propulsion system. The splitter is disposed at the inlet into the open rotor propulsion system between the flowpath and an environment external to the open rotor propulsion system. At least the splitter is configured with an acoustic treatment that borders the environment external to the open rotor propulsion system.

According to still another aspect of the present invention, another apparatus is provided for an aircraft. This apparatus includes an open propulsor rotor, a turbine engine core, a housing structure and an open guide vane structure. The turbine engine core is configured to power operation of the open propulsor rotor. The turbine engine core includes a compressor section, a combustor section and a turbine section. The housing structure includes an engine case and a nacelle. The engine case houses the turbine engine core. The nacelle provides an aerodynamic cover over the engine case. The open guide vane structure is connected to the housing structure downstream of the open propulsor rotor within an external environment. A component of the housing structure is configured with an acoustic treatment downstream of the open guide vane structure along the external environment.

In an embodiment of any of the above, the open rotor propulsion system may also include an open guide vane structure downstream of the splitter. At least a portion of the acoustic treatment may be arranged between a leading edge of the splitter and the open guide vane structure.

In an embodiment according to any of the previous embodiments, at least a portion of the acoustic treatment may be located downstream of the open propulsor rotor and the open guide vane structure.

In an embodiment according to any of the previous embodiments, the turbine engine may include a compressor section, a combustor section, a turbine section and an engine case housing the compressor section, the combustor section and the turbine section. The open rotor propulsion system may also include a nacelle providing an aerodynamic cover over the engine case. The nacelle may include the component and the acoustic treatment.

In an embodiment according to any of the previous embodiments, at least a portion of the acoustic treatment may be axially aligned with one or more open guide vanes of the open guide vane structure.

In an embodiment according to any of the previous embodiments, the open guide vane structure may include a plurality of open guide vanes arranged circumferentially about the axis in the environment external to the open rotor propulsion system. At least a portion of the acoustic treatment may extend axially along and may be disposed circumferentially between a circumferentially neighboring pair of the open guide vanes.

In an embodiment according to any of the previous embodiments, at least a portion of the acoustic treatment may be located upstream of the open guide vane structure.

In an embodiment according to any of the previous embodiments, the portion of the acoustic treatment may also be located downstream of the open propulsor rotor.

In an embodiment according to any of the previous embodiments, the turbine engine may include a flowpath, a compressor section, a combustor section and a turbine section. The flowpath may extend through the compressor section, the combustor section and the turbine section from an inlet into the flowpath to an exhaust from the flowpath. At least a portion of the acoustic treatment may be disposed at the inlet into the flowpath.

In an embodiment according to any of the previous embodiments, the component may be disposed radially outboard of the flowpath.

In an embodiment according to any of the previous embodiments, the component may be disposed radially inboard of the flowpath at the inlet into the flowpath.

In an embodiment according to any of the previous embodiments, the acoustic treatment may project into an interior of the open rotor propulsion system along the flowpath.

In an embodiment according to any of the previous embodiments, the turbine engine may include a flowpath, a compressor section, a combustor section and a turbine section. The flowpath may extend through the compressor section, the combustor section and the turbine section from an inlet into the flowpath to an exhaust from the flowpath. The component may be configured as a splitter at the inlet into the flowpath.

In an embodiment according to any of the previous embodiments, the open propulsor rotor may be configured as or otherwise include the component.

In an embodiment according to any of the previous embodiments, the turbine engine may include a flowpath, a compressor section, a combustor section and a turbine section. The flowpath may extend through the compressor section, the combustor section and the turbine section from an inlet into the flowpath to an exhaust from the flowpath. The component may be configured as a center body at the exhaust from the flowpath.

In an embodiment according to any of the previous embodiments, the acoustic treatment may be configured as or otherwise include an acoustic panel with a cellular core.

In an embodiment according to any of the previous embodiments, the acoustic treatment may be configured as or otherwise include a single degree-of-freedom acoustic treatment.

In an embodiment according to any of the previous embodiments, the acoustic treatment may be configured as or otherwise include a multi degree-of-freedom acoustic treatment.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a propulsion system for an aircraft.
FIG. 2 is a schematic illustration of a portion of the propulsion system at a propulsion section.
FIG. 3 is a schematic cross-sectional illustration of a portion of an open propulsor rotor.
FIG. 4 is a schematic cross-sectional illustration of a portion of an open guide vane structure.
FIG. 5 is a schematic sectional illustration of a portion of a component configured with a single degree-of-freedom acoustic treatment.
FIGS. 6A and 6B are plan view illustrations of a portion of a cellular core with various sidewall arrangements.
FIG. 7 is a schematic sectional illustration of a portion of the component and the acoustic treatment of FIG. 5 during sound attenuation.
FIG. 8 is a schematic sectional illustration of a portion of the component configured with a double degree-of-freedom acoustic treatment.
FIG. 9 is a schematic cross-sectional illustration of a portion of the component with the acoustic treatment.

### DETAILED DESCRIPTION

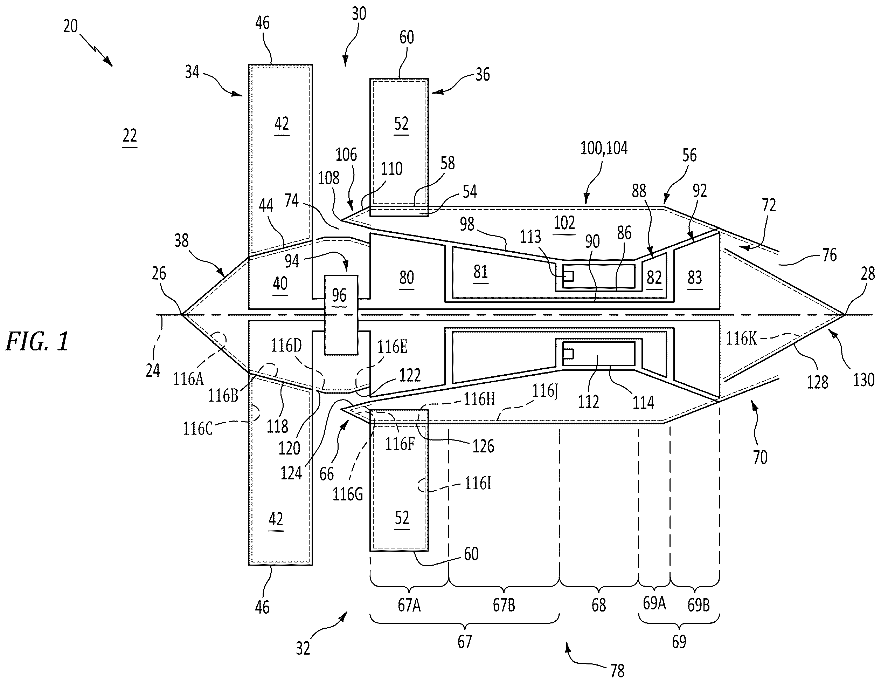

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 (e.g., an open rotor propulsion module) and a gas turbine engine 32.

The propulsion section 30 of FIG. 1 includes an open propulsor rotor 34 and an open guide vane structure 36. These propulsion section members 34 and 36 are un-ducted components of the aircraft propulsion system 20 and its propulsion section 30. The propulsion section 30 of FIG. 1 also includes a nose cone 38 disposed at (e.g., on, adjacent or proximate) the propulsion system forward end 26. Briefly, this nose cone 38 may be configured as a spinner which is rotatable with the propulsor rotor 34 about the propulsion system axis 24. Alternatively, the nose cone 38 may be configured as a stationary structure of the propulsion section 30.

The propulsor rotor 34 includes a rotor base 40 (e.g., a disk or a hub) and a plurality of open propulsor blades 42 (e.g., airfoils). The propulsor blades 42 are arranged and may be equispaced circumferentially about the rotor base 40 and the propulsion system axis 24 in an array (e.g., a circular array), which array of propulsor blades may be unshrouded or alternatively shrouded by a tubular propulsor rotor shroud dedicated to the propulsor rotor 34 for example. Each of the propulsor blades 42 is connected to (e.g., formed integral with or otherwise attached to) the rotor base 40. Each of the propulsor blades 42 projects spanwise along a span line of the respective propulsor blade 42 (e.g., radially relative to the propulsion system axis 24) out from an exterior surface 44 of the rotor base 40, into the external environment 22, to a distal tip 46 of the respective propulsor blade 42. Each propulsor blade 42 is thereby configured as an un-ducted and unshrouded (or alternatively shrouded) propulsor blade which is exposed to (e.g., disposed in) the surrounding external environment 22.

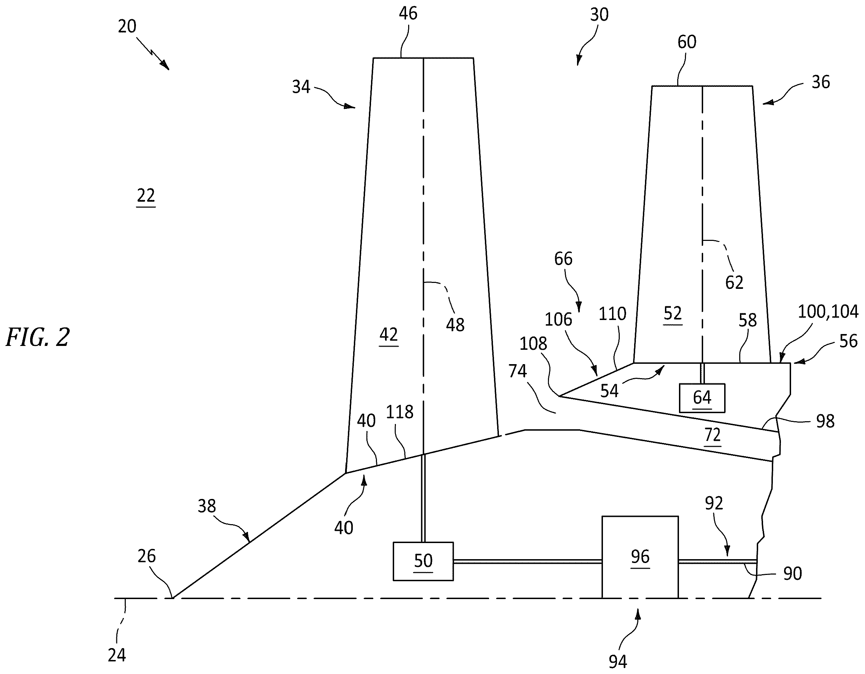

Referring to FIG. 2, each propulsor blade 42 may be configured to pivot about a respective blade pivot axis 48. This blade pivot axis 48 extends radially relative to the propulsion system axis 24. Each propulsor blade 42 of FIG. 2 is operatively coupled with a blade actuation system 50. This blade actuation system 50 is configured to pivot each propulsor blade 42 about its own respective blade pivot axis 48. By pivoting each propulsor blade 42 about its blade pivot axis 48, a pitch of the respective propulsor blade 42 may be changed. Of course, it is contemplated some or all of the propulsor blades 42 may be alternatively moved to change the propulsor blade pitch. Moreover, it is contemplated some or all of the propulsor blades 42 may alternatively be fixed pitch propulsor blades in other embodiments.

The guide vane structure 36 of FIG. 1 includes a plurality of open exit guide vanes 52 (e.g., airfoils) that are arranged and may be equispaced circumferentially about the propulsion system axis 24 in an array (e.g., a circular array), which array of guide vanes may be unshrouded or alternatively shrouded by a tubular guide vane shroud dedicated to the guide vane structure 36 for example. The guide vane structure 36 and its guide vanes 52 are arranged axially next to (e.g., adjacent) the propulsor rotor 34 and its propulsor blades 42. The guide vane structure 36 and its guide vanes 52 of FIG. 1, for example, are arranged downstream of the propulsor rotor 34 and its propulsor blades 42, without (e.g., any) other elements axially therebetween to obstruct, turn and/or otherwise influence the air propelled by the propulsor rotor 34 to the guide vane structure 36 for example. Each of the guide vanes 52 of FIG. 1 is coupled to a support structure 54 of a stationary housing structure 56 for the aircraft propulsion system 20. This support structure 54 may be configured as or otherwise include a support frame, a case and/or another fixed structure of the housing structure 56. Each of the guide vanes 52 projects spanwise along a span line of the respective guide vane 52 (e.g., radially relative to the propulsion system axis 24) out from an exterior surface 58 of the housing structure 56, into the external environment 22, to a distal tip 60 of the respective guide vane 52. Here, the exterior surface 58 radially borders the external environment 22 and forms an exterior aerodynamic flow surface of the aircraft propulsion system 20. Each guide vane 52 is thereby configured as an un-ducted and unshrouded (or alternatively shrouded) guide vane which is exposed to (e.g., disposed in) the surrounding external environment 22.

Referring to FIG. 2, each guide vane 52 may be configured to pivot about a respective vane pivot axis 62. This vane pivot axis 62 extends radially relative to the propulsion system axis 24. Each guide vane 52 of FIG. 2 is operatively coupled with a vane actuation system 64, which vane actuation system 64 may be discrete from or integrated as part of the blade actuation system 50. The vane actuation system 64 is configured to pivot each guide vane 52 about its own respective vane pivot axis 62. By pivoting each guide vane 52 about its vane pivot axis 62, a pitch of the respective guide vane 52 may be changed. Of course, it is contemplated some or all of the guide vanes 52 may be alternatively moved to change the guide vane pitch. Moreover, it is contemplated some or all of the guide vanes 52 may alternatively be fixed pitch guide vanes in other embodiments.

Referring to FIG. 1, the turbine engine 32 includes an inlet section 66, a compressor section 67, a combustor section 68, a turbine section 69 and an exhaust section 70. The compressor section 67 of FIG. 1 includes a low pressure compressor (LPC) section 67A and a high pressure compressor (HPC) section 67B. The turbine section 69 of FIG. 1 includes a high pressure turbine (HPT) section 69A and a low pressure turbine (LPT) section 69B. The turbine engine 32 also includes an engine flowpath 72 (e.g., an annular core flowpath) which extends longitudinally through the aircraft propulsion system 20 of FIG. 1 and its turbine engine 32 from an airflow inlet 74 into the engine flowpath 72 to a combustion products exhaust 76 from the engine flowpath 72. The flowpath inlet 74 is also an airflow inlet into the aircraft propulsion system 20 of FIG. 1 and its turbine engine 32. The flowpath exhaust 76 is also a combustion products exhaust from the aircraft propulsion system 20 of FIG. 1 and its turbine engine 32. At least (or only) the LPC section 67A, the HPC section 67B, the combustor section 68, the HPT section 69A and the LPT section 69B collectively form a core 78 (e.g., a gas generator) of the turbine engine 32.

Each of the engine sections 67A, 67B, 69A and 69B includes a respective bladed rotor 80-83; e.g., a ducted engine rotor. Each of these engine rotors 80-83 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 72. Each of the rotor blades is connected to the respective rotor base. Each of the rotor blades projects radially (e.g., spanwise) out from the respective rotor base into the engine flowpath 72 and to a distal tip of the respective rotor blade.

The HPC rotor 81 is coupled to and rotatable with the HPT rotor 82. The HPC rotor 81 of FIG. 1, for example, is connected to the HPT rotor 82 by a high speed shaft 86. At least (or only) the HPC rotor 81, the HPT rotor 82 and the high speed shaft 86 collectively form a high speed rotating structure 88; e.g., a high speed spool of the engine core 78. This high speed rotating structure 88 of FIG. 1 and its members 81, 82 and 86 are rotatable about the propulsion system axis 24. However, in other embodiments, the high speed rotating structure 88 and its members 81, 82 and 86 may alternatively be rotatable about another rotational axis which is (e.g., laterally and/or angularly) offset from the rotational axis of the propulsor rotor 34.

The LPC rotor 80 is coupled to and rotatable with the LPT rotor 83. The LPC rotor 80 of FIG. 1, for example, is connected to the LPT rotor 83 by a low speed shaft 90. At least (or only) the LPC rotor 80, the LPT rotor 83 and the low speed shaft 90 collectively form a low speed rotating structure 92; e.g., a low speed spool of the engine core 78. This low speed rotating structure 92 of FIG. 1 and its members 80, 83 and 90 are rotatable about the propulsion system axis 24. However, in other embodiments, the low speed rotating structure 92 and its members 80, 83 and 90 may alternatively be rotatable about another rotational axis which is (e.g., laterally and/or angularly) offset from the rotational axis of the propulsor rotor 34.

The low speed rotating structure 92 is coupled to the propulsor rotor 34 through a drivetrain 94. This drivetrain 94 may be configured as a geared drivetrain, where a geartrain 96 (e.g., a transmission, a speed change device, an epicyclic geartrain, etc.) is disposed between and operatively couples the propulsor rotor 34 to the low speed rotating structure 92 and its LPT rotor 83. With this arrangement, the propulsor rotor 34 may rotate at a different (e.g., slower) rotational speed than the low speed rotating structure 92 and its LPT rotor 83. Here, the propulsor rotor 34 and the low speed rotating structure 92 may rotate in a common (the same) direction about the propulsion system axis 24 or in opposite directions about the propulsion system axis 24 depending, for example, upon the specific configuration of the geartrain 96. Alternatively, the drivetrain 94 may be configured as a direct-drive drivetrain, where the geartrain 96 is omitted. With such an arrangement, the propulsor rotor 34 rotates at a common (the same) rotational speed as the low speed rotating structure 92 and its LPT rotor 83.

The engine sections 66-70 may be arranged sequentially along the propulsion system axis 24 and are housed within and/or formed by the housing structure 56. This housing structure 56 includes an engine case 98 (e.g., a gas generator case), a nacelle 100 and an internal housing compartment 102. The engine case 98 houses one or more of the engine sections 67A-69B; e.g., the engine core 78. The engine case 98 of FIG. 1, for example, extends axially along (e.g., axially overlaps) and extends circumferentially about (e.g., circumscribes) the engine sections 67A-69B and the bladed rotors 80-83. The engine case 98 may also house at least a portion of the drivetrain 94 and its geartrain 96. The nacelle 100 houses and provides an aerodynamic cover over the engine case 98. An exterior wall 104 of the nacelle 100 of FIG. 1, for example, is disposed radially outboard of, extends axially along (e.g., axially overlaps) and extends circumferentially about (e.g., circumscribes) the engine core 78 and its engine case 98. This nacelle wall 104 may at least partially or completely form the exterior surface 58. The housing compartment 102 of FIG. 1 is at least partially or completely formed by and is disposed radially between the engine case 98 and the nacelle wall 104. With the foregoing arrangement, the bladed rotors 80-83 are disposed within the housing structure 56. By contrast, the propulsor rotor 34 and the guide vane structure 36 are disposed at least partially (or completely) outside of the housing structure 56 within the external environment 22.

During operation of the aircraft propulsion system 20 of FIG. 1, ambient air within the external environment 22 is propelled by the rotating propulsor rotor 34 in the downstream, aft direction towards the propulsion system aft end 28. A major portion (e.g., more than 50%) of this air bypasses the turbine engine 32 to provide forward thrust while a minor portion (e.g., less than 50%) of the air flows into the aircraft propulsion system 20 and its turbine engine 32. For example, an outer stream of the air propelled by the rotating propulsor rotor 34 flows axially across the guide vane structure 36 and outside of the housing structure 56 and its exterior surface 58; e.g., along an exterior of the nacelle 100. The guide vane structure 36 conditions (e.g., straightens out, de-swirls, etc.) the outer stream of air within the external environment 22 to enhance the forward thrust. By contrast, an inner stream of the air propelled by the rotating propulsor rotor 34 may bypass the guide vane structure 36 and enter the turbine engine 32 and its engine flowpath 72 through the flowpath inlet 74.

Briefly, the air propelled by the propulsor rotor 34 may be split into the outer air stream and the inner air stream by a splitter 106; e.g., an annular eagle beak structure. A leading edge 108 of the splitter 106 of FIG. 1 forms a radial outer peripheral boundary of the flowpath inlet 74. An outer exterior wall 110 of this splitter 106 may extend axially along the propulsion system axis 24 from the splitter leading edge 108 to (or about) the guide vane structure 36. The splitter 106 of FIG. 1 and its splitter exterior wall 110 may thereby form a portion of the exterior surface 58 between the splitter leading edge 108 and the guide vane structure 36.

The air entering the engine flowpath 72 through the flowpath inlet 74 may be referred to as "core air". This core air is compressed by the LPC rotor 80 and the HPC rotor 81 and directed into a combustion chamber 112 (e.g., an annular combustion chamber) of a combustor 114 (e.g., an annular combustor) in the combustor section 68. Fuel is injected into the combustion chamber 112 by one or more fuel injectors 113 and mixed with the compressed core air to provide a fuel-air mixture. This fuel-air mixture is ignited and combustion products thereof flow through and sequentially drive rotation of the HPT rotor 82 and the LPT rotor 83. The rotation of the HPT rotor 82 and the LPT rotor 83 respectively drive rotation of the HPC rotor 81 and the LPC rotor 80 and, thus, compression of the core air. The rotation of the LPT rotor 83 also drives the rotation of the propulsor rotor 34 through the drivetrain 94 and its geartrain 96. The turbine engine 32 and its low speed rotating structure 92 thereby power operation of (e.g., drive rotation of) the propulsor rotor 34 during the aircraft propulsion system operation.

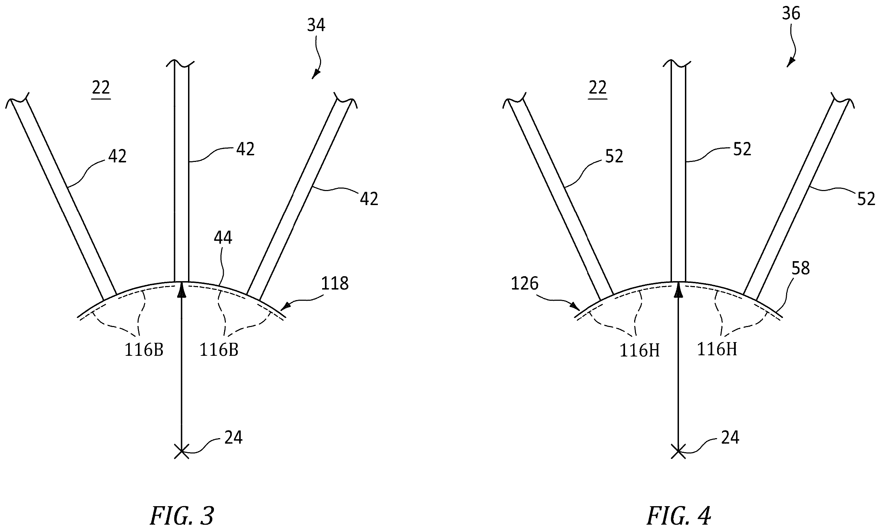

During the foregoing aircraft propulsion system operation and during aircraft flight, various members of the aircraft propulsion system 20 may generate sound; e.g., noise. The sound may be actively generated by one or more of the propulsion system members. For example, the above-described operation of the turbine engine 32 and rotation of the propulsor rotor 34 may collectively generate a relatively large portion of the sound. The sound may also be passively generated by one or more of the propulsion system members. For example, impingement of air against and/or the flow of the air along various non-rotating members of the aircraft propulsion system 20 may also generate a smaller portion of the sound. Examples of these non-rotating aircraft propulsion system members include, but are not limited to, the housing structure 56 and the guide vane structure 36 and its guide vanes 52. To reduce, suppress, eliminate and/or otherwise attenuate one or more frequencies of sound waves generated during the aircraft propulsion system operation and the aircraft flight, one or more components of the aircraft propulsion system 20 may be configured with acoustic treatment 116A-K (generally referred to as "116"). These acoustically treated aircraft propulsion system components may include any one or more of the following:
the nose cone 38;
an outer platform 118 of the propulsor rotor 34 and, more particularly, circumferential segments of the outer platform 118 between each circumferential neighboring (e.g., adjacent) pair of the propulsor blades 42 (see FIG. 3);
one or more of the propulsor blades 42, particularly at sides (e.g., pressure and/or suction sides) of the respective propulsor blade(s) 42 for example;
an exterior wall 120 extending axially between the propulsor rotor 34 and the flowpath inlet 74;
an inner flowpath wall 122 forming a radial inner peripheral boundary of the engine flowpath 72 at least at the flowpath inlet 74;
an outer flowpath wall 124 forming a radial outer peripheral boundary of the engine flowpath 72 at least at the flowpath inlet 74;
the splitter 106 and its splitter exterior wall 110;
an exterior wall 126 of the support structure 54 and, more particularly, circumferential segments of the exterior wall 126 between each circumferential neighboring (e.g., adjacent) pair of the guide vanes 52 (see FIG. 4);
one or more of the guide vanes 52, particularly at sides (e.g., pressure and/or suction sides) of the respective guide vane(s) 52 for example;
the nacelle 100 and its nacelle wall 104; and/or
an outer wall 128 of a center body 130 (e.g., an exhaust cone) at the propulsion system aft end 28, which center body outer wall 128 may form a radial inner peripheral boundary of the flowpath exhaust 76.

The present disclosure, however, is not limited to the foregoing exemplary acoustically treated aircraft propulsion system components. Various other components of the aircraft propulsion system 20 with surfaces that border the external environment 22 and/or surfaces which border a flowpath (e.g., the engine flowpath 72) at an interface (e.g., inlet or outlet) with the external environment 22 may also or alternatively be configured with the acoustic treatment 116.

The aircraft propulsion system component(s) configured with the acoustic treatment 116 may be selected such that the acoustic treatment 116 partially or completely axially, circumferentially, radially and/or otherwise covers one or more regions of the aircraft propulsion system 20. These regions may include any one or more of the following:
an external region axially forward and/or upstream of the propulsor rotor 34 (e.g., between the propulsion system forward end 26 and the propulsor rotor 34);
an external region axially aligned with and/or otherwise axially overlapping (e.g., extending axially along) the propulsor rotor 34 and its members 42 and 118;
an external region axially between the propulsor rotor 34 and the guide vane structure 36;
an internal region projecting into an interior of the aircraft propulsion system 20 from the flowpath inlet 74 (or the flowpath exhaust 76);
an external region axially aligned with and/or otherwise axially overlapping (e.g., extending axially along) the guide vane structure 36 and the elements 52 and 126;
an external region axially aft and/or downstream of the guide vane structure 36 (e.g., between the guide vane structure 36 and a downstream, aft end of the nacelle 100 proximate the flowpath exhaust 76); and/or
an external region along the center body 130.

The present disclosure, however, is not limited to the foregoing exemplary acoustically treated aircraft propulsion system regions, nor the foregoing exemplary division of the aircraft propulsion system 20 into regions.

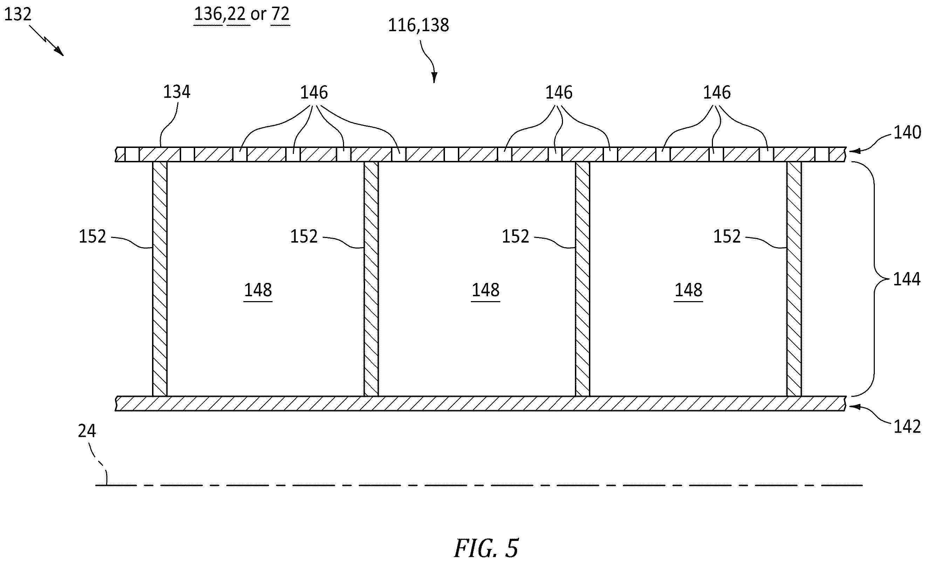

FIG. 5 illustrates a portion of an exemplary aircraft propulsion system component 132 configured with the acoustic treatment 116, which aircraft propulsion system component 132 may be any one of the acoustically treated aircraft propulsion system components described herein. The acoustic treatment 116 extends along a surface 134 (e.g., an exterior surface, a flowpath surface, etc.) of the aircraft propulsion system component 132 that is exposed an open volume 136 through which the sound to be attenuated propagates; e.g., the external environment 22, the engine flowpath 72, etc. The acoustic treatment 116 may be integrated with the aircraft propulsion system component 132. The acoustic treatment 116, for example, may be included as a part of the aircraft propulsion system component 132. Alternatively, the aircraft propulsion system component 132 may be included as a part of (e.g., configured as a skin of) the acoustic treatment 116.

The acoustic treatment 116 is configured to reduce, suppress, eliminate and/or otherwise attenuate one or more frequencies of the sound waves propagating through the open volume 136 along the component surface 134. The acoustic treatment 116 of FIG. 5, for example, is configured as a cellular acoustic structure 138; e.g., an acoustic panel. This acoustic structure 138 of FIG. 5 includes a fluid permeable (e.g., perforated) face skin 140, a fluid impermeable (e.g., non-perforated) back skin 142 and a cellular core 144.

The face skin 140 is configured as an exterior skin of the aircraft propulsion system component 132 which forms the component surface 134 and borders the open volume 136. The face skin 140 includes a plurality of perforations 146; e.g., apertures such as through-holes. Each of these face skin perforations 146 extends laterally through a thickness of the face skin 140.

The back skin 142 may be configured as a continuous, uninterrupted and/or nonporous skin. The back skin 142 of FIG. 5, for example, is configured without any perforations at least aligned with the cellular core 144.

The cellular core 144 is arranged laterally between the face skin 140 and the back skin 142. The cellular core 144 of FIG. 5, for example, extends laterally from an interior side of the face skin 140 to an interior side of the back skin 142. The cellular core 144 may also be connected to (e.g., formed integral with or attached to) the face skin 140 and/or the back skin 142.

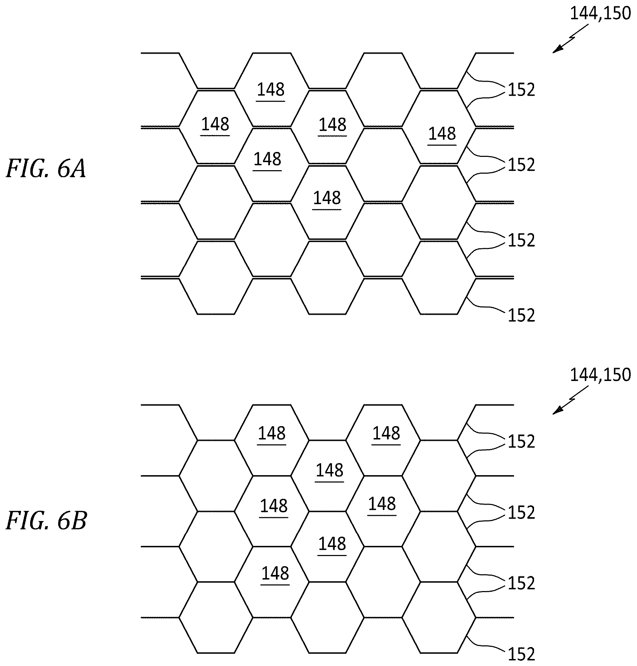

The cellular core 144 forms one or more internal chambers 148 (e.g., acoustic resonance chambers, cavities, etc.) laterally between the face skin 140 and the back skin 142. The cellular core 144 of FIG. 6A, for example, includes a cellular core structure 150 with a plurality of corrugated sidewalls 152. These corrugated sidewalls 152 are arranged in a side-by-side array and are connected to one another such that each neighboring pair of the corrugated sidewalls 152 forms an array of the internal chambers 148 (e.g., spanwise and/or longitudinally) therebetween. While the corrugated sidewalls 152 may be discrete elements, some or all of the corrugated sidewalls 152 may alternatively be formed integral with one another as shown in FIG. 6B. Such an integral sidewall structure may be formed using machining, additive manufacturing and/or other manufacturing processes.

Each of the internal chambers 148 of FIG. 5 extends laterally within / through the cellular core 144 between and to the face skin 140 and the back skin 142. One or more of all of the internal chambers 148 may thereby each be fluidly coupled with a respective set of one or more of the face skin perforations 146.

Each of the internal chambers 148 has a first chamber sectional geometry (e.g., shape, size, etc.) when viewed in a first reference plane; e.g., the plane of FIG. 5. This first chamber sectional geometry may have a polygonal shape; e.g., a rectangular shape. Referring to FIGS. 6A and 6B, each of the internal chambers 148 has a second chamber sectional geometry (e.g., shape, size, etc.) when viewed in a second reference plane; e.g., the plane of FIG. 6A, 6B. This second chamber sectional geometry may have a polygonal shape; e.g., a hexagonal shape. With such a configuration, the cellular core structure 150 may be a honeycomb core. The present disclosure, however, is not limited to foregoing exemplary cellular core configuration. For example, one or more or all of the internal chambers 148 may each alternatively have a circular, elliptical or other non-polygonal cross-sectional geometry. Furthermore, various other types of honeycomb cores and, more generally, various other types of cellular cores for an acoustic structures are known in the art, and the present disclosure is not limited to any particular ones thereof.

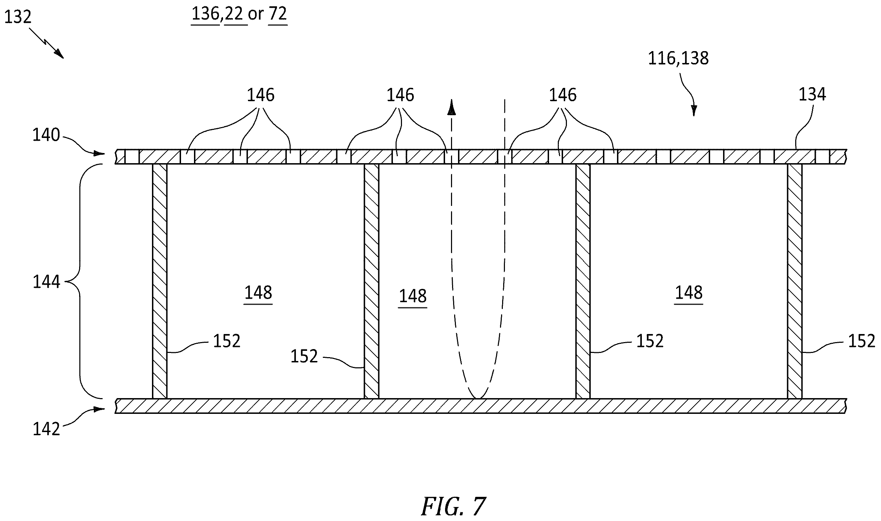

Referring to FIG. 7, the acoustic structure 138 may be configured as a single-degree of freedom (SDOF) acoustic structure. Sound waves propagating within the open volume 136, for example, may enter the aircraft propulsion system component 132 and its associated acoustic structure 138 through the face skin perforations 146. Within the acoustic structure 138, the sound waves may travel through a respective one of the internal chambers 148 and reflect against, for example, the back skin 142. These reflected sound waves may travel back through the respective internal chamber 148 and exit the aircraft propulsion system component 132 and its associated acoustic structure 138 through the respective face skin perforation(s) 146, where those reflected sound waves may be out of phase from and destructively interfere with incoming sound waves. Of course, the sound waves may also or alternatively reflect against one or more other elements of the acoustic structure 138 which may further influence sound attenuation.

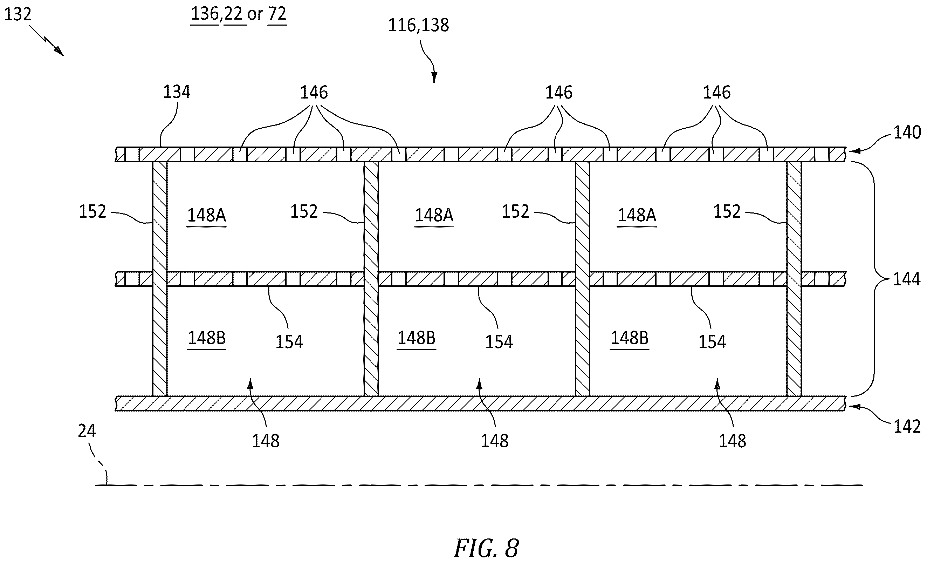

While the acoustic structure 138 is described above as a single-degree of freedom (SDOF) acoustic structure, the present disclosure is not limited thereto. For example, referring to FIG. 8, the acoustic structure 138 may alternatively be configured as a multi-degree of freedom (MDOF) acoustic structure; e.g., a double-degree of freedom (DDOF) acoustic structure. One or more or all of the internal chambers 148 of FIG. 8, for example, may each be provided with at least one fluid-permeable (e.g., perforated) septum 154 to divide that respective internal chamber 148 into a set of fluidly coupled sub-chambers 148A and 148B. Moreover, while each internal chamber 148 or sub-chamber 148A, 148B is shown in FIGS. 5, 7 and 8 as an open space (e.g., a volume unoccupied by another element), it is contemplated one or more of the internal chambers 148 or sub-chamber 148A, 148B may alternatively be partially or completely filled with a porous material such as foam and/or felt.

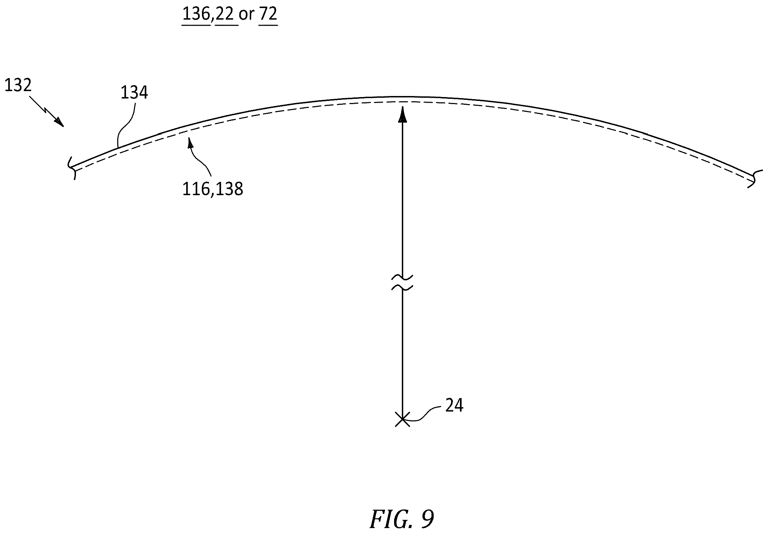

Referring to FIG. 5, where the aircraft propulsion system component 132 is configured as one of the acoustically treated aircraft propulsion system components (e.g., 38, 42, 52, 104, 110, 118, 120, 122, 124, 126, 128) of FIG. 1, the acoustic structure 138 / the acoustic treatment 116 may extend axially along the propulsion system axis 24 and the component surface 134 thereby partially or completely covering an axial extent of the aircraft propulsion system component 132 and its component surface 134. Referring to FIG. 9, where the aircraft propulsion system component 132 is configured as one of the acoustically treated aircraft propulsion system components (e.g., 38, 104, 110, 118, 120, 122, 124, 126, 128) of FIG. 1, the acoustic structure 138 / the acoustic treatment 116 may extend circumferentially about (e.g., partially or completely around) the propulsion system axis 24 and along the component surface 134 thereby partially or completely covering a circumferential extent of the aircraft propulsion system component 132 and its component surface 134. Where the aircraft propulsion system component 132 is configured as one of the acoustically treated aircraft propulsion system components (e.g., 42, 52) of FIG. 1, the acoustic structure 138 / the acoustic treatment 116 (see FIG. 5) may extend radially along the component surface 134 (see FIG. 5) thereby partially or completely covering a radial extent of the aircraft propulsion system component and its component surface.

Referring to FIG. 1, the engine flowpath 72 may extend longitudinally from the flowpath inlet 74, sequentially through the inlet section 66, the LPC section 67A, the HPC section 67B, the combustor section 68, the HPT section 69A, the LPT section 69B and the exhaust section 70, to the flowpath exhaust 76. The engine flowpath 72 of FIG. 1 is configured such that the core air and the combustion products generally flow in the aft, downstream direction towards the propulsion system aft end 28. The core air and the combustion products thereby flow along with the ambient air propelled by the rotating propulsor rotor 34 in a common axial direction - the downstream, aft direction. The turbine engine 32 of the present disclosure, however, is not limited to such an exemplary common flow engine arrangement. For example, the engine flowpath 72 may alternatively be configured such that the core air and the combustion products generally flow in a forward, upstream direction towards the propulsion system forward end 26. The core air and the combustion products may thereby flow in an opposite direction as the ambient air propelled by the rotating propulsor rotor 34. Here, the turbine engine 32 may have a reverse flow engine arrangement.

The aircraft propulsion system 20 of FIG. 1 and its propulsion section 30 are described above with a tractor configuration; e.g., where the propulsor rotor 34 is disposed at or otherwise near the propulsion system forward end 26. It is contemplated, however, the propulsion section 30 may alternatively be disposed at or otherwise near the propulsion system aft end 28 to provide a pusher fan configuration. Moreover, while the turbine engine 32 is described above with a particular two rotating structure arrangement, the present disclosure is not limited thereto. For example, the LPC rotor 80 may be omitted to configure the LPT rotor 83 as a power turbine (PT) rotor for the propulsor rotor 34. In another example, the turbine engine 32 may also include another rotating structure; e.g., an intermediate speed spool for the engine core 78.

The guide vane structure 36 is described above as a fixed (e.g., non-rotatable) guide vane structure. It is contemplated, however, the guide vane structure 36 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 34 and the structure 36 are counter-rotating about the propulsion system axis 24); and (B) a single open rotor and swirl recovery vane (SRV) propulsion system during a single rotor mode of operation (e.g., when the propulsor rotor 34 is rotating and the structure 36 is rotationally fixed about the propulsion system axis 24). Note, when the guide vane structure 36 is configured to selectively rotate about the propulsion system axis 24, the moving guide vanes 52 operate as propulsor blades.

The aircraft propulsion system 20 of FIG. 1 and its propulsion section 30 are described as including the guide vane structure 36 with an SRV or SRB configuration. The present disclosure, however, is not limited to such an exemplary propulsion system configuration. For example, the aircraft propulsion system 20 may alternatively be configured without an open guide vane structure. The aircraft propulsion system 20 may thereby be configured as a single rotor (SR) open rotor propulsion system. In another example, the aircraft propulsion system 20 may alternatively be configured with a set of the open propulsor rotors (e.g., counter-rotating propulsor rotors) operatively coupled to the turbine engine 32 (see FIG. 1) through the geartrain 96. The aircraft propulsion system 20 may thereby be configured as a counter-rotating open rotor (CROR) propulsion system.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for an aircraft, comprising:
an open rotor propulsion system (20) including an open propulsor rotor (34), an open guide vane structure (36) and a turbine engine (32);
the open guide vane structure (36) axially next to the open propulsor rotor (34); and
the turbine engine (32) configured to drive rotation of the open propulsor rotor (34) about an axis (24);
wherein an exterior surface (134) of a component (132) of the open rotor propulsion system (20) is exposed to and borders an environment (22) external to the open rotor propulsion system (20), and the component (132) is configured with an acoustic treatment (116) extending axially and circumferentially along the exterior surface (134).

2. The apparatus of claim 1, wherein at least a portion of the acoustic treatment (116) is located downstream of the open propulsor rotor (34) and the open guide vane structure (36).

3. The apparatus of claim 1 or 2, wherein
the turbine engine (32) includes a compressor section (67), a combustor section (68), a turbine section (69) and an engine case (98) housing the compressor section (67), the combustor section (68) and the turbine section (69); and
the open rotor propulsion system (20) further includes a nacelle (100) providing an aerodynamic cover over the engine case (98), and the nacelle (100) comprises the component (132) and the acoustic treatment (116).

4. The apparatus of claim 1, 2 or 3, wherein at least a portion of the acoustic treatment (116) is axially aligned with one or more open guide vanes (52) of the open guide vane structure (36).

5. The apparatus of any preceding claim, wherein
the open guide vane structure (36) comprises a plurality of open guide vanes (52) arranged circumferentially about the axis (24) in the environment (22) external to the open rotor propulsion system (20); and
at least a portion of the acoustic treatment (116) extends axially along and is disposed circumferentially between a circumferentially neighboring pair of the plurality of open guide vanes (52).

6. The apparatus of any preceding claim, wherein at least a portion of the acoustic treatment (116) is located upstream of the open guide vane structure (36), and optionally further located downstream of the open propulsor rotor (34).

7. The apparatus of claim 1, wherein
the turbine engine (32) includes a flowpath (72), a compressor section (67), a combustor section (68) and a turbine section (69), and the flowpath (72) extends through the compressor section (67), the combustor section (68) and the turbine section (69) from an inlet (74) into the flowpath (72) to an exhaust (76) from the flowpath (72); and
at least a portion of the acoustic treatment (116) is disposed at the inlet (74) into the flowpath (72).

8. The apparatus of claim 7, wherein the component (132) is disposed radially outboard of the flowpath (72).

9. The apparatus of claim 7, wherein the component (132) is disposed radially inboard of the flowpath (72) at the inlet (74) into the flowpath (72).

10. The apparatus of claim 7, 8 or 9, wherein the acoustic treatment (116) projects into an interior of the open rotor propulsion system (20) along the flowpath (72).

11. The apparatus of claim 1, wherein
the turbine engine (32) includes a flowpath (72), a compressor section (67), a combustor section (68) and a turbine section (69), and the flowpath (72) extends through the compressor section (67), the combustor section (68) and the turbine section (69) from an inlet (74) into the flowpath (72) to an exhaust (76) from the flowpath (72); and
the component (132) is configured as a splitter (106) at the inlet (74) into the flowpath (72).

12. The apparatus of claim 1, wherein the open propulsor rotor (34) comprises the component (132).

13. The apparatus of claim 1, wherein
the turbine engine (32) includes a flowpath (72), a compressor section (67), a combustor section (68) and a turbine section (69), and the flowpath (72) extends through the compressor section (67), the combustor section (68) and the turbine section (69) from an inlet (74) into the flowpath (72) to an exhaust (76) from the flowpath (72);
the component (132) is configured as a center body (130) at the exhaust (76) from the flowpath (72).

14. The apparatus of any preceding claim, wherein the acoustic treatment (116) comprises an acoustic panel (138) with a cellular core (144).

15. The apparatus of any preceding claim, wherein the acoustic treatment (116) comprises a single degree-of-freedom acoustic treatment (116) or a multi degree-of-freedom acoustic treatment (116).
